# EUROPEAN PATENT SPECIFICATION

(11) **EP 0 613 795 B1**
(45) Date of publication and mention of the grant of the patent: **14.05.1997**
(21) Application number: 94301501.6
(22) Date of filing: 02.03.1994
(51) Int. Cl.: B60C 13/00, B60C 17/00

(54) **Run-flat safety tyre**
Sicherheitsluftreifen mit Notlaufseigenschaften
Bandage pneumatique de sécurité pour roulage à plat

(30) Priority: 02.03.1993 GB 9304363
(43) Date of publication of application: 07.09.1994
(73) Proprietor: Sumitomo Rubber Industries Limited, Kobe-shi, Hyogo-ken (JP)
(72) Inventor: Appleton, Peter Raymond, Sutton Coldfield, West Midlands B76 8LN (GB)
(74) Representative: Stewart, Charles Geoffrey

(56) References cited:
- EP-A- 0 385 192
- PATENT ABSTRACTS OF JAPAN vol. 4, no. 169 (M-43)21 November 1980 & JP-A-55 119 508 (BRIDGESTONE CORP.) 13 September 1980
- DATABASE WPI Week 9031, Derwent Publications Ltd., London, GB; AN 90-234857 & JP-A-2 162 101 (YOKOHAMA TIRE&RUBBER CO LTD.) 21 June 1990

## Description

This invention relates to pneumatic tyres and in particular to run-flat safety tyres.

In the conventional pneumatic tyre the tyre carcass is tensioned by the internal inflation pressure thus providing sufficient rigidity in the tyre sidewall to enable the tyre to carry load. If the internal pressure is lost for any reason then the carcass tension and thus the sidewall rigidity is lost and the sidewall experiences severe deflection which rapidly generates a large amount of heat. Additionally the tyre sidewalls may collapse completely such that the upper and lower internal surfaces contact and the differential slip between these generates frictional heat further adding to the temperature rise of the tyre. Thus in a very short time the high temperature generated degrades the material of the carcass and the tyre is destroyed. Accordingly the conventional pneumatic tyre has no practical run-flat capability.

In order to provide run-flat performance for a pneumatic tyre various structures have been proposed. For example in the inner chamber formed by the tyre and wheelrim assembly an elastic member or an inflatable structure to form an independent air chamber have been proposed to provide load support in the event of tyre deflation.

Such structure however have not found utility in the modern tyre because the weight of the tyre and wheelrim assembly is greatly increased whereby high speed performance is significantly reduced.

Alternatively it has been proposed to improve the load bearing ability of the tyre sidewall under deflated conditions by increasing the thickness of the sidewall thereby increasing its rigidity. Although the run-flat capability of such tyres is improved their performance is limited due to the nature of conventional rubber compounds. Accordingly the necessary sidewall thickness to provide full load support is such that normal flexing as the sidewall passes through the contact patch generates heat which due to the poor conductivity of rubber is retained in the bulk of the sidewall. Thus in run-flat use the tyre is limited in maximum speed and range such that the tyre does not overheat.

A high performance tyre with self-supporting capability is known, for example, from EP-A-0385192. This known tyre comprises in the sidewall region a lenticular shaped member of elastomeric material incorporating textile reinforcement cords. A tyre having a sidewall incorporating short fibres including aramid fibres is known from JP-A-2162101. However in both of these known tyres the extra reinforcement cords or fibres are disposed at a substantial angle to the radial direction of the tyre in order to avoid excessive increase in sidewall bending rigidity and thereby a loss of ride comfort.

The object of the present invention is therefore to provide a pneumatic tyre which is improved in run-flat performance without sacrificing high speed running or range.

According to the present invention a pneumatic tyre comprises a tread portion, a pair of axially spaced bead portions, a pair of sidewalls extending between the edges of the tread and the bead portions, a pair of bead cores disposed one in each bead portion, a carcass extending between the bead portions through the sidewalls and tread portion and a belt disposed radially outside the carcass extending across the tread portion, wherein each sidewall is provided axially inside the carcass with a liner packing piece extending radially inwardly to the bead portion and radially outwardly into the tread region, the packing piece comprises a fibre-reinforced rubber composition characterised in that the fibre-reinforcement comprises aramid fibres in the form of short discontinuous fibrillated fibres which are aligned lengthwise at an angle of less than 5° to the tyre radial direction.

Preferably the aramid fibres are 0.2 to 5mm long. They may also or alternatively be 2-20 microns thick. Their surface area may also be in the range of 4 to 20 m²/gram. Preferably the fibres are present in the rubber composition in a quantity in the range of 2-20 parts per hundred parts by weight of rubber. Most preferably the fibres are present in the range 8 to 12 parts per hundred of rubber.

Further aspects of the present invention will become apparent from the following description by way of example only of one embodiment in conjunction with the accompanying drawing in which:

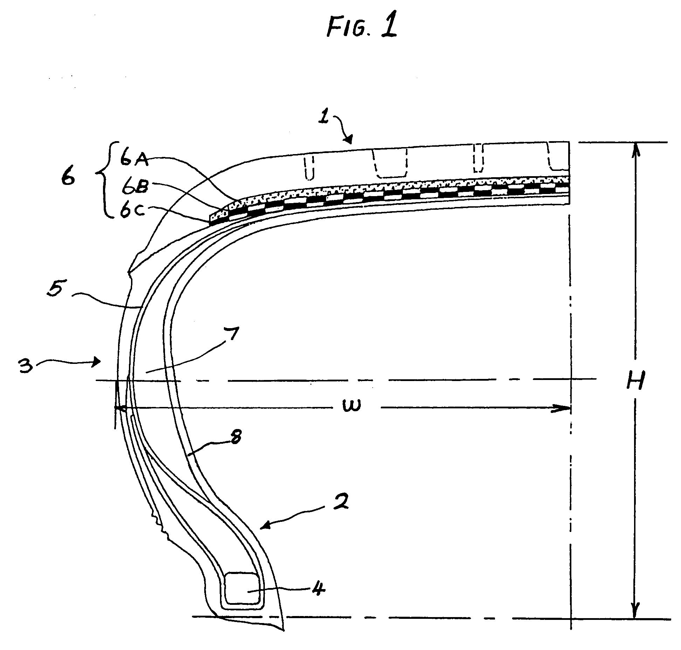

Figure 1 is a schematic cross-sectional view of one half of a tyre according of the present invention.

Figure 1 shows a pneumatic safety tyre according to the present invention for high speed use. The tyre size is 225/55VR16 and is designed for vehicles capable of speeds in excess of 210Km/h.

The tyre comprises a tread portion 1, a pair of axially spaced bead portions 2, a pair of sidewalls 3 extending between the edges of the tread and the bead portions, a toroidal carcass 5 extending between the bead portions 2 and turned up around bead cores 4 located one in each bead region 2 from the axial inside to the outside and a belt 6 disposed radially outside the carcass 5 and inside the tread.

The tyre had an aspect ratio, defined as the ratio H/2xW of the tyre section height H to the maximum section width 2xW, of 0.55.

The carcass 5 comprises one ply of cords arranged radially at an angle of 70 to 90 degrees. In this embodiment the carcass cords are polyester but other organic fibres cords such as nylon, rayon, aramid or the like or steel may be used.

The belt 6 comprises a breaker comprising plies 6B and 6C and a bandage Belt 6A. Each of the belt plies 6B and 6C is composed of parallel cords laid at a small angle with respect to the tyre equator and arranged to cross each other. For the breaker belt cords steel cords or high modulus organic cords may be used.

The bandage belt comprises parallel cords substantially at 0° to the tyre equator. For the cords of the bandage belt 6A organic fibre cords such as rayon, nylon or polyester or the like may be used.

In each of the sidewall portions 3 a liner packing piece 7 is disposed inside the carcass 5 and outside the air-retaining inner liner 8. The liner packing piece 7 is tapered in section towards its radially inner and outer extremities. The radially inner extremity extends into the bead region 2 and is terminated radially outward of the bead core 4. The radially outer extremity of the liner packing piece 7 extends into the tread portion 1 and terminates beneath the axially outer portion of the belt 6.

The liner packing piece 7 comprises a fibre reinforced rubber composition containing 2 to 20 parts by weight of short reinforcing fibres per 100 parts by weight of rubber. The short fibres are made of aramid material which has been fibrillated to produce a pulp having a high surface area. The fibres have a length in the range 0.2 to 5mm, a cross-sectional diameter in the range of 2-20 microns and an available surface in the range 4-20 m²/g.

The short reinforcing fibres are orientated substantially in the radial direction of the tyre.

Test tyres of size and structure according to Figure 1 were prepared and tested for run-flat performance. Example tyres according to the present invention incorporated a liner packing piece comprising rubber composition A of Table 1, containing 10 parts by weight per hundred of rubber of KEVLAR aramid pulp (KEVLAR is a Registered Trade Mark of E I Du Pont de Nemours). The KEVLAR pulp was incorporated in the composition in the form of a masterbatch of 44.4% weight of pulp, 44.4% weight carbon black and 11.2% natural rubber.

The fibre-containing composition was processed by known techniques to orientate the fibres in one direction and the tyres assembled with the fibres orientated radially in the tyre. Comparative tyres were also prepared having a liner packing piece of a conventional rubber compound, composition B of Table 1.

These two types of tyres were tested on a Jaguar XJ6 vehicle under a load of 490Kg per tyre. The tyres were run on a normal road surface at zero pressure (inflation valve core removed) at a constant speed of 60Km/h in conditions that were 80% dry. The comparative tyres containing the liner packing piece of a conventional rubber compound ran under these conditions for a distance of 16Km before failing due to overheating. The tyres according to the present invention incorporating the fibre reinforced liner packing piece travelled a distance of 185Km before the test was stopped.

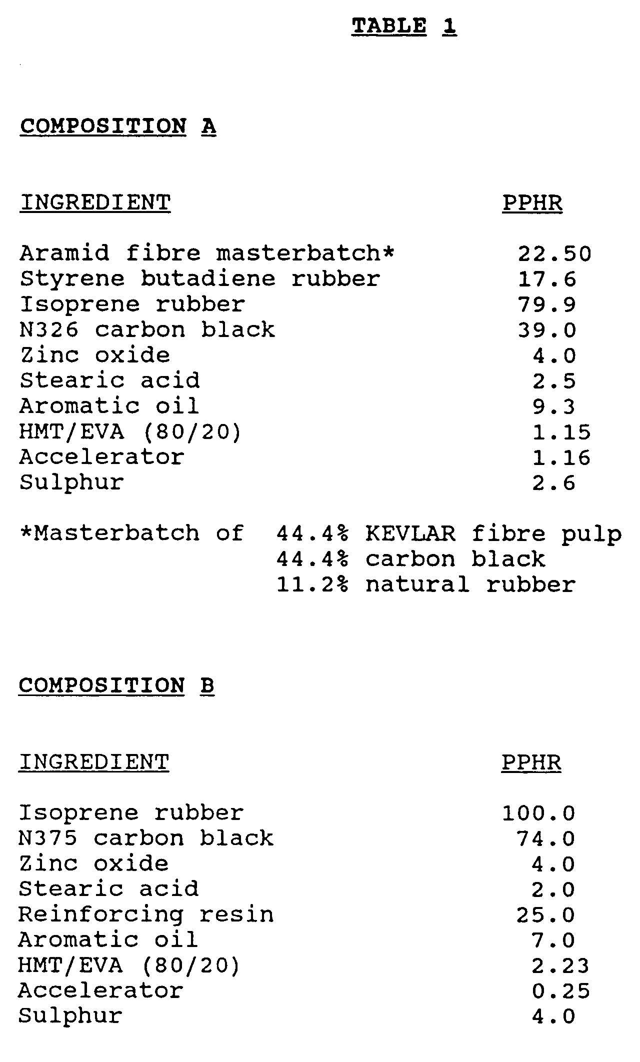

## Claims

1. A pneumatic tyre comprising a tread portion (1), a pair of axially spaced bead portions (2), a pair of sidewalls (3) extending between the edges of the tread and the bead portions (2), a pair of bead cores ( 4) disposed one in each bead portion (2), a carcass (5) extending between the bead portions (2) through the sidewalls (3) and tread portion (1) and a belt (6) disposed radially outside the carcass (5) extending across the tread portion (1), wherein each sidewall is provided axially inside the carcass (5) with a liner packing piece (7) extending radially inwardly to the bead portion (2) and radially outwardly into the tread region (1), the packing piece comprises a fibre-reinforced rubber composition characterised in that the fibre-reinforcement comprises aramid fibres in the form of short discontinuous fibrillated fibres which are aligned lengthwise at an angle of less than 5° to the tyre radial direction.

2. A tyre according to claim 1 characterised in that the aramid fibres have a length in the range 0.2 to 5mm.

3. A tyre according to claim 1 or 2 characterised in that the aramid fibres have a cross-sectional diameter in the range 2-20 microns.

4. A tyre according to claims 1 to 3 characterised in that the aramid fibres have a surface area of 4 to 20 m²/g.

5. A tyre according to any of claims 1 to 4 characterised in that the aramid fibres are present in the rubber composition of the liner packing piece in an amount of 2-20 parts per one hundred parts of rubber by weight.

6. A tyre according to any of claims 1 to 5 characterised in that the aramid fibres are present in the rubber composition of the liner packing piece in an amount of 8-12 parts per hundred parts by weight of rubber.

7. A tyre according to any of claims 1 to 6 characterised in that the rubber composition comprises 10 to 50 parts by weight of styrene butadiene rubber per 100 parts by weight of rubber.

8. A tyre according to any of claims 1 to 7 characterised in that the rubber composition comprises 50 to 100 parts by weight of Isoprene rubber per 100 parts by weight of rubber.

9. A tyre according to any of claims 1 to 8 characterised in that the rubber composition comprises 20 to 50 parts of butadiene rubber per 100 parts by weight of rubber.

10. A tyre according to any of claims 1 to 9 characterised in that the rubber composition comprises 30 to 60 parts by weight of carbon black per 100 parts by weight of rubber.

11. A tyre according to claim 10 characterised in that the carbon black is one or more selected from the group comprising ASTM Ref. N326, N375 and N220.

## Patentansprüche

1. Ein pneumatischer Reifen mit einem Laufflächenabschnitt (1), einem Paar axial beabstandete Wulstabschnitte (2), ein Paar sich zwischen den Laufflächenkanten und den Wulstabschnitten (2) erstreckende Seitenwände (3), ein Paar Wulstkerne (4), von denen einer in jedem Wulstabschnitt (2) angeordnet ist, eine sich zwischen den Wulstabschnitten (2) durch die Seitenwände (3) und den Laufflächenabschnitt (1) erstreckende Karkasse (5) und einen radial außerhalb der Karkasse (5) angeordneten Gürtel (6), der sich quer über den Laufflächenabschnitt (1) erstreckt, in dem jede Seitenwand axial innerhalb der Karkasse (5) mit einem sich radial nach innen zu dem Wulstabschnitt (2) und radial nach außen in den Laufflächenbereich (1) erstreckenden Einlagefüllkörperstück (7) versehen ist, wobei das Füllkörperstück eine faserverstärkte Gummimischung aufweist, dadurch gekennzeichnet, daß die Faserverstärkung Aramidfasern in der Form von kurzen, diskontinuierlichen, feinfaserigen Fasern aufweist, welche längs unter einem Winkel von weniger als 5° zu der Reifenradialrichtung ausgerichtet sind.

2. Ein Reifen nach Anspruch 1, dadurch gekennzeichnet, daß die Aramidfasern eine Länge in dem Bereich 0,2 bis 5 mm haben.

3. Ein Reifen nach Anspruch 1 oder 2, dadurch gekennzeichnet, daß die Aramidfasern einen Querschnittsdurchmesser in dem Bereich 2-20 Mikrometer haben.

4. Ein Reifen nach den Ansprüchen 1 bis 3, dadurch gekennzeichnet, daß die Aramidfasern einen Oberflächeninhalt von 4 bis 20 m²/g haben.

5. Ein Reifen nach einem der Ansprüche 1 bis 4, dadurch gekennzeichnet, daß die Aramidfasern in der Gummimischung des Einlagefüllkörperstücks in einer Menge von 2-20 Teilen pro hundert Gewichtsteile Gummi vorhanden sind.

6. Ein Reifen nach einem der Ansprüche 1 bis 5, dadurch gekennzeichnet, daß die Aramidfasern in der Gummimischung des Einlagefüllkörperstücks in einer Menge von 8-12 Teilen pro hundert Gewichtsteile Gummi vorhanden sind.

7. Ein Reifen nach einem der Ansprüche 1 bis 6, dadurch gekennzeichnet, daß die Gummimischung 10 bis 50 Gewichtsteile Styrol-Butadien-Kautschuk pro 100 Gewichtsteile Gummi aufweist.

8. Ein Reifen nach einem der Ansprüche 1 bis 7, dadurch gekennzeichnet, daß die Gummimischung 50 bis 100 Gewichtsteile Isoprenkautschuk pro 100 Gewichtsteile Gummi aufweist.

9. Ein Reifen nach einem der Ansprüche 1 bis 8, dadurch gekennzeichnet, daß die Gummimischung 20 bis 50 Teile Butadienkautschuk pro 100 Gewichtsteile Gummi aufweist.

10. Ein Reifen nach einem der Ansprüche 1 bis 9, dadurch gekennzeichnet, daß die Gummimischung 30 bis 60 Gewichtsteile Ruß pro 100 Gewichtsteile Gummi aufweist.

11. Ein Reifen nach Anspruch 10, dadurch gekennzeichnet, daß der Ruß einer oder mehrere ausgewählt aus der Gruppe mit ASTM Ref. N326, N375 und N220 ist.

## Revendications

1. Pneumatique comprenant une partie (1) de bande de roulement, deux parties de talon (2) espacées axialement, deux flancs (3) disposés entre les bords de la bande de roulement et les parties de talon (2), deux tringles (4) placées chacune dans une partie de talon (2), une carcasse (5) disposée entre les parties de talon (2), dans les flancs (3) et la partie de bande de roulement (1), et une ceinture (6) disposée radialement à l'extérieur de la carcasse (5) et sur la partie de bande de roulement (1), dans lequel chaque flanc comporte, axialement à l'intérieur de la carcasse (5), une pièce de garniture de revêtement (7) disposée radialement à l'intérieur de la partie de talon (2) et radialement à l'extérieur dans la région de bande de roulement (1), la pièce de garniture comprenant une composition de caoutchouc renforcée de fibres, caractérisé en ce que le renforcement de fibres comporte des fibres d'aramide sous forme de courtes fibres fibrillées discontinues alignées longitudinalement avec un angle inférieur à 5° par rapport à la direction radiale du pneumatique.

2. Pneumatique selon la revendication 1, caractérisé en ce que les fibres d'aramide ont une longueur comprise entre 0,2 et 5 mm.

3. Pneumatique selon la revendication 1 ou 2, caractérisé en ce que les fibres d'aramide ont un diamètre en coupe compris entre 2 et 20 µm.

4. Pneumatique selon les revendications 1 à 3, caractérisé en ce que les fibres d'aramide ont une surface spécifique de 4 à 20 m²/g.

5. Pneumatique selon l'une quelconque des revendications 1 à 4, caractérisé en ce que les fibres d'aramide sont présentes dans la composition de caoutchouc de la pièce de garniture de revêtement en quantité comprise entre 2 et 20 parties pour 100 parties en poids de caoutchouc.

6. Pneumatique selon l'une quelconque des revendications 1 à 5, caractérisé en ce que les fibres d'aramide sont présentes dans la composition de caoutchouc de la pièce de garniture de revêtement en quantité comprise entre 8 et 12 parties pour 100 parties en poids de caoutchouc.

7. Pneumatique selon l'une quelconque des revendications 1 à 6, caractérisé en ce que la composition de caoutchouc contient 10 à 50 parties en poids de caoutchouc de butadiène-styrène pour 100 parties en poids de caoutchouc.

8. Pneumatique selon l'une quelconque des revendications 1 à 7, caractérisé en ce que la composition de caoutchouc contient 50 à 100 parties en poids de caoutchouc d'isoprène pour 100 parties en poids de caoutchouc.

9. Pneumatique selon l'une quelconque des revendications 1 à 8, caractérisé en ce que la composition de caoutchouc contient 20 à 50 parties de caoutchouc de butadiène pour 100 parties en poids de caoutchouc.

10. Pneumatique selon l'une quelconque des revendications 1 à 9, caractérisé en ce que la composition de caoutchouc comprend 30 à 60 parties en poids de noir de carbone pour 100 parties en poids de caoutchouc.

11. Pneumatique selon la revendication 10, caractérisé en ce que le noir de carbone est un ou plusieurs noirs choisis dans le groupe comprenant les noirs ASTM N326, N375 et N220.
